# EUROPÄISCHE PATENTSCHRIFT

(11) **EP 2 300 852 B1**
(45) Veröffentlichungstag und Bekanntmachung des Hinweises auf die Patenterteilung: **06.04.2016**
(21) Anmeldenummer: 09772454.6
(22) Anmeldetag: 30.06.2009
(51) Int. Cl.: G01S 17/95

(54) **DIREKTEMPFANG-DOPPLER-LIDAR-VERFAHREN UND DIREKTEMPFANG-DOPPLER-LIDAR-VORRICHTUNG**
DIRECT DETECTION DOPPLER LIDAR METHOD AND DIRECTION DETECTION DOPPLER LIDAR DEVICE
DISPOSITIF LIDAR DOPPLER À RÉCEPTION DIRECTE ET PROCÉDÉ ASSOCIÉ

(30) Priorität: 04.07.2008 DE 102008031682
(43) Veröffentlichungstag der Anmeldung: 30.03.2011
(73) Patentinhaber: Airbus Defence and Space GmbH, 85521 Ottobrunn (DE)
(72) Erfinder: SCHMITT, Nikolaus, 85649 Brunnthal-Otterloh (DE); REHM, Wolfgang, 88138 Hergensweiler (DE); PISTNER, Thomas, 80993 München (DE)
(74) Vertreter: Kastel, Stefan
(86) Internationale Anmeldenummer: PCT/EP2009/058216
(87) Internationale Veröffentlichungsnummer: WO 2010/000754

(56) Entgegenhaltungen:
- EP-A- 0 111 438
- GB-A- 2 000 411
- US-A- 5 056 914
- SCHMITT ET AL: "The AWIATOR airborne LIDAR turbulence sensor" AEROSPACE SCIENCE AND TECHNOLOGY, EDITIONS SCIENTIFIQUES ET MEDICALES ELSEVIER, Bd. 11, Nr. 7-8, 1. November 2007 (2007-11-01), Seiten 546-552, XP022329043 ISSN: 1270-9638
- DURAND ET AL: "aladin airborne demonstrator: a doppler wind lidar to prepare esa's adm-aeolus explorer mission" PROC OF SPIE, [Online] Bd. 6296, 2006, Seiten 629611D-1-629611D-13, XP002553034 Gefunden im Internet: URL:http://spiedl.aip.org/getpdf/servlet/G etPDFServlet?filetype=pdf&id=PSISDG0062960 0000162961D000001&idtype=cvips&prog=normal > [gefunden am 2009-10-29]

## Beschreibung

Die Erfindung betrifft ein Verfahren zur Doppler-LIDAR-Messung von Geschwindigkeiten mittels Direktempfang sowie eine Vorrichtung zur Durchführung des Verfahrens.

LIDAR steht für "light detection and ranging" und ist eine dem Radar ("radiowave detection and ranging") sehr verwandte Methode zur Entfernungs- und Geschwindigkeitsmessung sowie zur Fernmessung atmosphärischer Parameter. Statt Funkwellen wie beim RADAR werden jedoch Laserstrahlen verwendet.

Ein Beispiel für eine Doppler-LIDAR-Vorrichtung und ein damit durchführbares Verfahren zur Messung von Windgeschwindigkeiten ist aus der EP 1756620B1, US 20080117433 A1 oder US 2006262324 A1 bekannt.

Bei Direktempfang-Doppler-Lidar-Vorrichtungen wird Laserstrahlung auf das zu messende Medium gerichtet und die daraufhin reflektierte Strahlung direkt empfangen und hinsichtlich einer Doppler-Verschiebung der Laserwellenlänge untersucht, um so Relativgeschwindigkeiten festzustellen.

Doppler-LIDAR-Systeme unter Verwendung der Direktempfangstechnik werden beispielsweise zur vorausschauenden Messung von Turbulenzen, Seitenwinden oder Wirbelschleppen vor einem Luftfahrzeug, insbesondere Flugzeug, verwendet. Neben einer reinen Warnfunktion können die Messsignale insbesondere auch direkt in die Flugsteuerung des Flugzeuges eingekoppelt werden, um beispielsweise Böen, Seitenwinde oder Wirbelschleppeneinflüsse proaktiv, also bevor das Flugzeug negativ auf die äußere Strömungsänderung reagiert, so auszuregeln, dass ein gleichbleibender ruhiger Flugzustand erhalten bleibt, Belastung des Flugzeuges reduziert werden und die Sicherheit im Flugzeug und für das Flugzeug gewährleistet bleibt.

Ein wesentliches Problem ist hierbei die auftretende Dynamik der Rückstreuintensität. Aufgrund Aerosolgehalt und Luftdichte kann die Intensität des rückgestreuten Signals leicht um drei Größenordnungen variieren. Starke Variation erhält man zudem, wenn das Luftfahrzeug, beispielsweise Flugzeug, in welchem sich das LIDAR-Messsystem befindet, durch Wolkenfetzen fliegt, so dass die Gesamtdynamik leicht vier bis fünf Größenordnung betragen kann.

Heutige Detektoren weisen einen sehr viel geringeren Dynamikbereich auf. Beispielsweise verfügen CCD-Arrays, welche bei einer sogenannten Fringe-Imaging-Technik eingesetzt werden, typischerweise einen Dynamikbereich von 10 bis12 bit auf. Ausgehend von einer Mindestintensität von 6 bis 7 bit beträgt die verbleibende Dynamik etwa ein bis zwei Größenordnungen.

Eine Abschwächung des Empfangssignals mit beispielsweise elektrooptischen Modulatoren ist sehr aufwändig, teuer und aufgrund der üblicherweise großen Aperturen für CCD-Chips schwer erreichbar.

Aus dem Artikel N.P. Schmitt et al: "The AWIATOR airborne LIDAR turbulence sensor", ScienceDirect, Aerospace Science and Technology 11 (2007) 546-552, ist ein Verfahren zur luftfahrzeuggestützten Messung von Windgeschwindigkeiten mittels Kurzpuls-Direktempfangs-UV-LIDAR bekannt. Mittels eines UV-Lasers werden kurze Pulse von 10 ns mit kHz-Raten ausgesandt. Die zurückgestreute Strahlung wird in einem Fabry-Perot-Interferometer zu Interferogrammen umgeformt, die mit einer Kamera aufgenommen und in digitaler Bildverarbeitung verarbeitet werden. Es wird erläutert, dass Messfehler durch Erhöhung der gezählten Photonen verringert werden können. Hierzu wird eine Vergrößerung der Laserleistung und eine Optimierung der Gating-Zeiten vorgeschlagen.

Aus der GB 2 000 411 A wird ein Verfahren zur Messung von Wolkenhöhen vorgeschlagen, wobei zur Ausmessung in jeder zu messenden Höhe reflektierte Laserpulse während Gating-Intervallen integriert werden, um die Messsignalstärke zu erhöhen. Es wird eine feste Anzahl von aufzuintegrierenden Laserpulsen vorgeschlagen.

Aus dem Artikel Durand et al: ALADIN Airborne Demonstrator: a Doppler Wind Lidar to prepare ESA's ADM-Aeolus Explorer Mission; Earth Observing Systems XI, SPIE, Vol, 6296, 62961 D, werden Voruntersuchungen für ein satellitengestütztes Wetterbeobachtungs-LIDAR beschrieben. In den Voruntersuchungen sind Flugversuche mit einem LIDAR-System durchgeführt worden, welches einen Laser aufweist, der Laserpulse mit 50 Hz aussendet. Rückgestreute Strahlung wird in zwei getrennten Detektoren zur Erfassung von Mie-Streuung einerseits und zur Erfassung Rayleigh-Streuung andererseits untersucht. In dem späteren satellitengestützten System sollen Laserpulse über 7 s aufintegriert werden, um eine Wegstrecke von 50 km zu überstreichen. Die gewonnenen Daten sollen dann wieder digital in einzelne Teilbereiche getrennt werden.

Aus der EP 0 111 438 A1 ist ein Verfahren zur Messung der Wolkenhöhe bekannt, wobei zunächst die Dämpfung in tiefer liegenden Lichtschichten durch Aufintegrieren von Messsignalen aus diesen tieferen Schichten gemessen wird und abhängig von dieser Dämpfung die Lichtintensität des ausgesandten Signals gesteuert wird. Dies kann durch Steuerung einer Impulsfrequenz erfolgen.

US 5 056 914 B offenbart eine Vorrichtung und ein Verfahren zum Erhalten von Objektdaten mittels Direktempfang. In der Pixelnummer einer CCD-Zeile wird dabei die Entfernung des Objekts kodiert, so dass aus einer Scanzeit und der Pixelnummer auch eine Geschwindigkeit des Objekts bestimmt werden kann.

Aufgabe der Erfindung ist es, ein Verfahren zur Erhöhung eines Dynamikumfanges eines Doppler-Lidar-Systems mit Direktempfang sowie eine Direktempfang-Doppler-LIDAR-Vorrichtung mit vergrößertem Dynamikumfang zu schaffen.

Diese Aufgabe wird durch ein Verfahren mit den Merkmalen des beigefügten Patentanspruches 1 sowie eine Direktempfang-Doppler-LIDAR-Vorrichtung mit den Merkmalen des nebengeordneten Patentanspruchs 10 gelöst.

Gemäß eines ersten Aspekts schafft die Erfindung ein Verfahren zur Doppler-LIDAR-Messung von Geschwindigkeiten mittels Direktempfang für ein Luftfahrzeug zum direkten Einkoppeln der Messsignale in die Flugsteuerung des Luftfahrzeugs, um eine äußere Strömungsänderung auszuregeln, wobei ein Laserstrahl (15) auf das zu messende Medium (16) gerichtet wird und von dem Medium (16) daraufhin abgestrahlte Strahlung (18) mittels eines Detektors (35) gemessen wird, mit:
a) Aussenden einer Vielzahl von Laserpulsen pro Messung (52) und
b) Aufintegration einer Vielzahl von mit dem Detektor (35) empfangener Laserpulse (51, 81 a, 81 b, 81 c) pro Messung (52),
wobei die Laserpulse mit einer Repetitionsrate ausgesandt werden, die um eine oder mehrere Größenordnungen über der Detektionsrate liegt,
und wobei die Laserpulse pro Messung mit einer Frequenz von größer oder gleich etwa 1 kHz ausgesandt werden.

Das Verfahren ist gekennzeichnet durch den Schritt:
c) Steuerung der Anzahl der auf dem Detektor (35) zu integrierenden oder integrierten Laserpulse (51, 81 a, 81 b, 81 c),
wobei die Steuerung in Abhängigkeit von der Intensität der von dem Medium (16) kommenden Strahlung (18) erfolgt.

Bevorzugt ist vorgesehen, dass mittels der Steuerung der Anzahl der auf dem Detektor (35) zu integrierenden oder integrierten Laserpulse (51, 81 a, 81 b, 81 c) die Gesamtintensität der empfangenen Strahlung eingestellt wird.

Bevorzugt ist vorgesehen, dass Schritt c) wenigstens einen der folgenden Teilschritte umfasst:
c1) Steuerung einer die Laserpulse aussendenden Laserquelle (11) derart, dass eine definierte, veränderbare Anzahl von Laserpulsen ausgesandt wird;
c2) Steuerung der Anzahl der auf das Medium (16) gerichteten Laserpulse mittels einer der Laserquelle (11) nachgeschalteten steuerbaren ersten Schalteinrichtung;
c3) Steuerung des Detektors (35) derart, dass empfangene Laserpulse (51, 81 a, 81 b, 81 c) ausgeblendet oder nicht mit aufintegriert werden; und/oder
c4) Steuerung der Anzahl der von dem Detektor (35) empfangenen Laserpulse (51, 81a, 81 b, 81 c) mittels einer dem Detektor (35) vorgeschalteten steuerbaren zweiten Schalteinrichtung (24).

Bevorzugt ist vorgesehen, dass die Steuerung derart erfolgt, dass eine hohe Signalintensität unterhalb einer Übersteuerungsschwelle des Detektors (35) erhalten wird.

Bevorzugt ist vorgesehen, dass Schritt c) umfasst:
ca) Vergleichen eines aktuellen Messwerts mit einem vorgegebenen oberen Schwellwert für eine zu hohe Intensität und Erniedrigen der Anzahl der aufintegrierten Laserpulse (51, 81 a, 81 b, 81 c) für eine nachfolgenden Messung, falls der aktuelle Messwert den oberen Schwellwert überschreitet, und/oder
cb) Vergleichen eines aktuellen Messwerts mit einem vorgegebenen unteren Schwellwerts für eine zu niedrige Intensität und Erhöhen der Anzahl der aufintegrierten Laserpulse (51, 81 a, 81 b, 81 c) für eine nachfolgende Messung, falls der aktuelle Messwert den unteren Schwellwert unterschreitet.

Bei Letzterem ist bevorzugt vorgesehen, dass die Teilschritte ca) und cb) in unmittelbar oder mittelbar aufeinanderfolgenden Messungen wiederholt durchgeführt werden, bis der aktuelle Messwert zwischen dem oberen und dem unteren Schwellwert liegt und/oder dass die Veränderung der Anzahl von auf dem Detektor zu integrierenden oder integrierten Laserpulse (51, 81a, 81b, 81c) um einen konstanten Faktor oder um einen konstanten additiven/subtraktiven Betrag oder proportional zu einer Abweichung von einem vorbestimmten Idealwert erfolgt.

Bevorzugt ist vorgesehen, dass Schritt c) umfasst:
cd) Abschätzen einer zu erwartenden Intensität des Messsignals aus dem bisherigen Verlauf der Messsignalintensität und
ce) Einstellen der Anzahl der auf dem Detektor zu integrierenden Laserpulse (51, 81 a, 81 b, 81 c) aufgrund dieser Abschätzung.

Bevorzugt ist vorgesehen, dass im Fall von mehreren Messkanälen die Steuerung jeweils für jeden Kanal getrennt erfolgt.

Bevorzugt ist vorgesehen, dass für einen eventuellen Referenzkanal die Steuerung getrennt von den Messkanälen erfolgt.

Eine bevorzugte Ausgestaltung des Verfahrens ist gekennzeichnet durch:
d1) Auslesen des Detektors (35) mit einer konstanten Detektionsrate unabhängig von der Anzahl der integrierten Laserpulse (51, 81 a, 81 b, 81 c) oder
d2) Auslesen des Detektors (35) nach Erreichen einer vorbestimmten Intensität.

Dies erfolgt vorzugsweise derart, dass im Fall von d2) das Auslesen spätestens mit Ablauf einer voreingestellten Maximalzeit erfolgt, falls bis zum Ende der Maximalzeit die vorbestimmte Intensität nicht erreicht worden ist.

Eine bevorzugte Ausgestaltung des Verfahrens ist gekennzeichnet durch:
e) Erfassen der Anzahl der ausgesandten oder der zu integrierenden Laserpulse (51, 81 a, 81 b, 81 c) und
f) Bestimmen der tatsächlichen Signalamplitude aus der in Schritt e) erfassten Anzahl und aus der Intensität des Messsignals.

Bevorzugt ist vorgesehen, dass das Verfahren zur Erhöhung des Dynamikumfangs einer Direkt-Empfang-Doppler-Lidar-Vorrichtung (10) durchgeführt wird.

Bevorzugt ist vorgesehen, dass das Verfahren zur Messung von Luftgeschwindigkeiten, insbesondere zur vorausschauenden Messung von Turbulenzen, Seitenwinden und/oder Wirbelschleppen vor einem Luftfahrzeug (13) durchgeführt wird.

Gemäß eines weiteren Aspekts schafft die Erfindung eine Direktempfang-Doppler-LIDAR-Vorrichtung (10) für ein Luftfahrzeug zum Messen von Geschwindigkeiten mittels Direktempfang-Doppler-LIDAR und zum direkten Einkoppeln der Messsignale in die Flugsteuerung des Luftfahrzeugs, um eine äußere Strömungsänderung auszuregeln, mit einer Laserquelle (11) zum Aussenden von Laserstrahlung (15) auf ein zu messendes Medium (16), einem Detektor (35) zum Empfangen von Strahlung (18), die bei Bestrahlung mit der Laserstrahlung (15) von dem Medium (16) abgestrahlt, insbesondere gestreut, wird, und einer Auswerteeinrichtung (19), welche aufgrund der von dem Detektor (35) empfangenen Strahlung wenigstens eine Geschwindigkeit des Mediums (16) bestimmt, wobei die Laserquelle (11) zum Aussenden einer Vielzahl von Laserimpulsen pro Messung (52) des Detektors (35) ausgebildet ist und wobei der Detektor (35) zum Integrieren einer Vielzahl von Laserpulsen (51, 81 a, 81 b, 81 c) pro Messung (52) ausgebildet ist.

Eine bevorzugte Ausgestaltung der Vorrichtung ist dadurch gekennzeichnet, dass eine Intensitäts-Steuereinrichtung (22) vorgesehen ist, mittels derer die Anzahl pro Messung zu integrierender Laserpulse (51, 81 a, 81 b, 81 c) steuerbar ist.

Bevorzugt ist vorgesehen, dass die Laserquelle (11) durch die Intensitäts-Steuereinrichtung (22) derart steuerbar ist, dass sie eine mittels der Intensitäts-Steuereinrichtung (22) einstellbare Anzahl von Laserpulse aussendet.

Dies ist in bevorzugter Ausgestaltung dadurch ermöglicht, dass die Laserquelle (11) einen durch die Intensitäts-Steuereinrichtung (22) ansteuerbaren Güteschalter zur Steuerung der Anzahl der zu integrierenden Laserpulse aufweist.

Bevorzugt ist vorgesehen, dass der Detektor (35) durch die Intensitäts-Steuereinrichtung (22) derart steuerbar ist, dass empfangene Laserpulse (51, 81a, 81 b, 81 c) ausgeblendet oder nicht mit aufintegriert werden.

Bevorzugt ist vorgesehen, dass die Intensitäts-Steuereinrichtung (22) zum Steuern einer ersten Schalteinrichtung ausgebildet ist, die der Laserquelle (11) nachgeordnet ist, um eine Anzahl von auf das Medium (16) gerichteter Laserpulse einzustellen.

Bevorzugt ist vorgesehen, dass die Intensitäts-Steuereinrichtung (22) zum Steuern einer zweiten Schalteinrichtung (24) ausgebildet ist, die dem Detektor (35) vorgeschaltet ist, um eine Anzahl empfangbarer von dem Medium (16) kommender Laserpulse (51, 81 a, 81 b, 81 c) einzustellen.

Bevorzugt ist vorgesehen, dass die erste und/oder die zweite Schalteinrichtung (24) einen elektrooptischen Schalter und/oder einen elektromechanischen Schalter und/oder einen faseroptischen Schalter (76) aufweisen.

Bevorzugt ist vorgesehen, dass eine Mikrokanalplatte (34) vor dem Detektor (35) vorgesehen ist, die mittels der Intensitäts-Steuereinrichtung (22) ansteuerbar ist.

Bevorzugt ist vorgesehen, dass eine Erfassungseinrichtung, insbesondere ein Zähler, zum Erfassen der Anzahl pro Messzyklus abgesandter und/oder empfangener Laserpulse vorgesehen ist und dass die Auswerteeinrichtung (19) zur Bestimmung der tatsächlichen Signalintensität aus der durch die Erfassungseinrichtung erfassten Anzahl und aus der durch den Detektor (35) gemessenen Signalintensität ausgebildet ist.

Vorteilhafte Ausgestaltungen der Erfindung sind Gegenstand der Unteransprüche.

Erfindungsgemäß werden pro Messung eine Vielzahl von Laserpulsen auf das zu messende Medium gerichtet. Bei der Messung werden eine Vielzahl von daraufhin von dem Medium kommenden, d.h. in der Regel gestreuten Laserpulsen mit einem Detektor erfasst und dort aufintegriert.

Das Messverfahren wird vorzugsweise entsprechend der bevorzugten Anwendung an Bord von Luftfahrzeugen sehr schnell durchgeführt. Beispielsweise bewegt sich die Dauer eines Messzykluses in der Größenordnung weniger Millisekunden. Laserpulse werden in einer um wenigstens ein bis zwei Größenordnung (also etwa um wenigstens einen Faktor 5-10 größer) größeren Anzahl abgestrahlt, also zum Beispiel im Kilohertz-Bereich.

Bei einer besonders bevorzugten Ausgestaltung des erfindungsgemäßen Verfahrens sowie der erfindungsgemäßen Vorrichtung wird zur LIDAR-Messung nicht ein Einzelpuls des Lasers pro Messung (Flash-Laser, typischerweise 10-100 Hz), sondern es wird ein hochrepetierender Laser verwendet, welcher pro Messung einige hundert Pulse aussendet (insbesondere Micropulse-Laser, typischerweise 5-50 kHz). Da für das Direktempfangsverfahren nicht die Lichtphase sondern nur die Frequenz und Intensität wichtig ist, entspricht die Detektion eines starken Laserpulses der Detektion vieler schwacher Laserpulse, die auf dem Detektor entsprechend integriert werden.

Weiter vorzugsweise wird die Anzahl der auf dem Detektor integrierten Lichtpulse gesteuert, so dass je nach Intensität der jeweiligen rückgestreuten Strahlung eine größere oder kleinere Zahl von Pulsen integriert wird, um eine optimale Gesamtintensität auf dem Detektor - also zum Beispiel über der erforderlichen Mindestintensität, aber deutlich unter der Sättigungsintensität - zu gewährleisten.

Mit den erfindungsgemäßen Vorschlägen ist der Aufbau eines Direktempfangs-LIDAR-Sytems möglich, mit welchem ohne störende Sättigung des Detektors LIDAR-Rückstreusignale mit einem Dynamikbereich von mehreren Größenordnungen mit einem Detektor erfassbar sind, welcher einen Dynamikbereich aufweist, der um einige Größenordnungen geringer ist, als dies für die Messaufgabe erforderlich wäre.

In bevorzugter Ausgestaltung wird bei dem Verfahren zur Messung von Geschwindigkeiten , beispielsweise der Luftgeschwindigkeit, unter Verwendung der Direktempfangs-Technik, vorgeschlagen, dass zur Messung ein hochrepetierender Laser mit Repetitionsrate um eine oder mehrere Größenordnungen über der Detektionsrate verwendet wird. Weiter ist bevorzugt, dass mehrere Laserpulse auf einem lichtempfindlichen Detektor zu einer einzelnen Messung integriert werden.

In bevorzugter Ausgestaltung kann die Anzahl der gesammelten Laserpulse auf dem Detektor variiert werden. Dies kann auf unterschiedlichen Wegen geschehen, die einzeln oder kumuliert durchführbar sind.

Beispielsweise kann eine Laserquelle entsprechend zur Aussendung einer definierten, veränderbaren Anzahl von Pulsen gesteuert werden. In einer anderen Ausgestaltung wird der Laserquelle, die beispielsweise durch einen Laser gebildet wird, ein entsprechend steuerbarer Schalter nachgeordnet. In einer weiteren Ausgestaltung ist der Detektor entsprechend steuerbar, so dass empfangene Laserpulse ausgeblendet und nicht aufintegriert werden. In einer anderen Variante wird dem Detektor ein entsprechend steuerbarer Schalter vorgeordnet. Die Steuerung erfolgt vorzugsweise derart, dass durch Veränderung der Anzahl der integrierten Laserpulse eine hohe Signal intensität erreicht aber eine Übersteuerung des Detektors vermieden wird, was bei sich ändernden Bedingungen der Rückstreuung des Lasersignals am Streuobjekt zum Schaffen eines entsprechend erhöhten Dynamikumfangs des Meßsystems weit über der Dynamik des reinen Detektors verwendet wird.

Die erfindungsgemäße Direktempfang-Doppler-LIDAR-Vorrichtung ist vorzugsweise zum Durchführen des erfindungsgemäßen Verfahrens ausgebildet. Vorzugsweise ist die Direktempfang-Doppler-LIDAR-Vorrichtung ein Doppler-Lidar-System zur Messung von Geschwindigkeiten, beispielsweise der Luftgeschwindigkeit, unter Verwendung der Direktempfangs-Technik, bei dem zur Messung ein hochrepetierender Laser mit Repetitionsrate um eine oder mehrere Größenordnungen über der Detektionsrate verwendet wird. Der Detektor ist weiter bevorzugt derart ausgebildet und/oder angesteuert, dass mehrere Laserpulse auf einem lichtempfindlichen Detektor zu einer einzelnen Messung integriert werden. Vorzugsweise ist eine Intensitäts-Steuereinrichtung vorgesehen, um die Anzahl der gesammelten Laserpulse auf dem Detektor zu variieren. Diese Intensitäts-Steuereinrichtung ist weiter bevorzugt derart ausgebildet, dass entweder der Laser entsprechend zur Aussendung einer definierten, veränderbaren Anzahl von Pulsen gesteuert wird oder dem Laser ein entsprechend steuerbarer Schalter nachgeordnet wird oder der Detektor entsprechend gesteuert wird oder empfangene Laserpulse ausgeblendet und nicht aufintegriert werden oder dem Detektor ein entsprechend steuerbarer Schalter vorgeordnet ist. Die Steuerung erfolgt bevorzugt derart, dass durch Veränderung der Anzahl der integrierten Laserpulse eine hohe Signalintensität erreicht aber eine Übersteuerung des Detektors vermieden wird. Insbesondere bei sich ändernden Bedingung der Rückstreuung des Lasersignals am Streuobjekt lässt sich so eine entsprechend erhöhte Dynamik des Meßsystems weit über der Dynamik des reinen Detektors erreichen.

In weiter bevorzugter Ausgestaltung des Verfahrens und/oder der Vorrichtung wird aus einem aktuellen Messsignal berechnet oder ermittelt, ob die Intensität zu gering oder zu hoch war. Dann wird entsprechend die Anzahl der zu integrierenden Pulse für die folgende Messung erhöht oder erniedrigt. Weiter vorzugsweise wird dieser Vorgang konsekutiv wiederholt, bis die Intensität weder zu hoch, noch zu niedrig ist.

Die Reduktion oder Erhöhung der Pulszahl kann um einen konstanten Faktor oder eine konstante additive Größe erfolgen. Alternativ kann die Reduktion oder Erhöhung der Pulszahl proportional zur Abweichung gegenüber dem Idealwert erfolgen.

In weiter bevorzugter Ausgestaltung der Erfindung wird aus dem Verlauf des Intensitätsanstiegs oder -abfalls eine Voraussage für die zu erwartende Intensität der nächsten Messung abgeschätzt, woraus die Anzahl der zu integrierenden Laserpulse bestimmt wird.

Im Falle von mehreren, unterschiedlichen Messkanälen, z.B. bei mehreren Messungen in unterschiedlichen Richtungen, kann diese Bestimmung jeweils für jeden Kanal getrennt erfolgen. Bei einer Ausgestaltung mit einem Referenzkanal kann für den Referenzkanal diese Berechnung unabhängig von den Messkanälen erfolgen.

Als Detektor wird bei einer bevorzugten Ausgestaltung eine Kamera oder ein Kamerachip verwendet. Bei einer weiteren Ausgestaltung wird als Detektor eine Photodiode oder ein ein- oder zweidimensionales Photodiodenarray verwendet.

Die Auslesung kann gemäß einer vorteilhaften Ausgestaltung der Erfindung in einem festen Takt unabhängig der Anzahl der integrierten Laserpulse erfolgen. Bei einer anderen vorteilhaften Ausgestaltung der Erfindung erfolgt die Auslesung nach Erreichen der erforderlichen Intensität, gegebenenfalls jedoch limitiert auf eine Maximalzeit.

Die Steuerung der Anzahl der zu integrierenden Laserpulse erfolgt bei einer Ausgestaltung, in der die Anzahl der von der Laserquelle abgegebenen Laserpulse gesteuert wird, zum Beispiel über einen Güteschalter der Laserquelle.

Alternativ oder zusätzlich kann die Steuerung der Anzahl der zu integrierenden Laserpulse über einen dem Laser nachgeordneten elektrooptischen Schalter, elektromechanischen Schalter oder faseroptischen Schalter erfolgen.

Vorzugsweise erfolgt die Steuerung der zu integrierenden Laserpulse empfangsseitig. Hierzu kann z.B. die Steuerung der Anzahl der zu integrierenden Laserpulse über einen dem Detektor vorgeordneten elektrooptischen Schalter oder über einen dem Detektor vorgeordneten faseroptischen elektrooptischen Schalter erfolgen. Besonders bevorzugt erfolgt die Steuerung der Anzahl der zu integrierenden Laserpulse über eine schaltbare Mikrokanalplatte. In einer weiteren Ausgestaltung der Erfindung ist eine Steuerung der Anzahl der zu integrierenden Laserpulse über eine elektronische Beschaltung des Detektorausganges oder entsprechende Steuerung des Kamerachips vorgesehen.

Gemäß einer vorteilhaften Weiterbildung der Erfindung wird die Anzahl der integrierten Laserpulse mittels beispielsweise eines Zählers erfasst und zusammen mit der Intensität des Messsignals zur Bestimmung der tatsächlichen Signalamplitude verwendet.

Ausführungsbeispiele der Erfindung werden nachfolgend anhand der beigefügten Zeichnungen näher erläutert. Darin zeigen
- Fig. 1: eine schematische Darstellung einer flugzeuggetragenen LIDAR-Vorrichtung;
- Fig. 2a, 2b: Rückstreuintensität an Luftaerosolen lokal (Fig. 2a) und aufgetragen versus Höhe für nördliche Hemisphäre, südliche Hemisphäre und Äquator (Fig. 2b) (POLDER data, 1997);
- Fig. 3: eine schematische Darstellung einer bei der Vorrichtung von Fig. 1 einsetzbaren Detektoranordnung;
- Fig. 4: ein Beispiel eines Interferogramms, das mit der Detektoranordnung von Fig. 3 aufgenommen ist;
- Fig. 5a, 5b: Veranschaulichungen der Regelung zu integrierender Laserpulse bei vorgegebener Belichtungszeit;
- Fig. 6a: eine Veranschaulichung eines typischen Intensitätsverlaufs versus Zeit;
- Fig. 6b: eine Veranschaulichung der zu integrierenden Pulszahl in Relation zu Fig. 5b;
- Fig. 6c: eine Veranschaulichung der auf den Detektor treffenden Intensität nach Regelung der aufzuintegrierenden Pulszahl;
- Fig. 7: ein weiteres Ausführungsbeispiel für eine Detektor-Anordnung, welche gegenüber derjenigen von Fig. 3 um einen faseroptischen Schalter erweitert ist; und
- Fig. 8a, 8b: Veranschaulichungen einer konstanten (Fig. 8a) und einer variablen (Fig. 8b) Belichtungszeit des Detektors bei unterschiedlicher aufzuintegrierender Pulszahl.

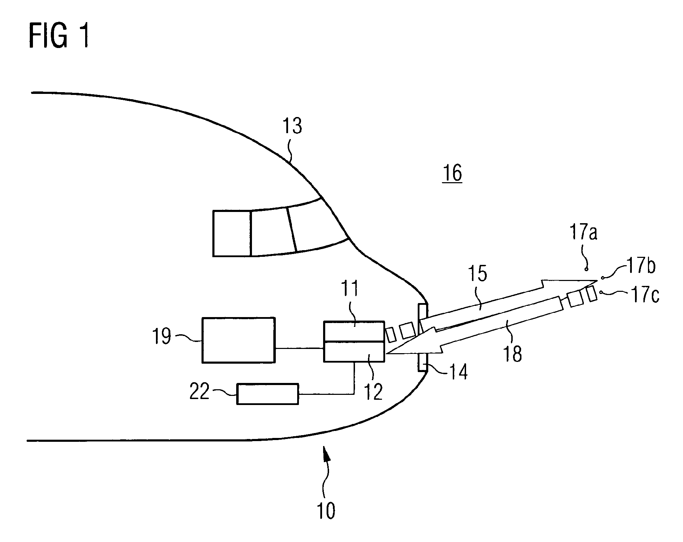

Fig. 1 zeigt eine schematische Darstellung einer Direktempfang-Doppler-LIDAR-Vorrichtung 10. Die Direktempfang-Doppler-LIDAR-Vorrichtung 10 ist in dem dargestellten Beispiel in einem Luftfahrzeug, dargestellt am Beispiel eines Flugzeuges 13, eingebaut.

Die Direktempfang-Doppler-LIDAR-Vorrichtung 10 weist eine Laserquelle 11 mit relativ schmaler Bandbreite (Einfrequenzbetrieb, typischerweise einige MHz Linienbreite) auf. Das Licht der Laserquelle 11 - ausgesendeter Laserstrahl 15 - wird durch ein Fenster 14 in die Atmosphäre 16 gesendet. In der Atmosphäre 16 wird das Licht der Laserquelle 11 an Teilchen 17a, 17b, 17c, ... der Luft in dem hier beispielhaft dargestellten Fall elastisch gestreut. Das Streulicht 18 wird von einer Detektor-Anordnung 12 aufgenommen. In einer Auswerteeinrichtung 19 wird aus der Dopplerverschiebung des an den Streupartikeln - Teilchen 17a, 17b, 17c - , welche sich relativ zur Direktempfang-Doppler-LIDAR-Vorrichtung 10 bewegen, rückgestreuten Streulichts 18 die Relativgeschwindigkeit bestimmt.

Bei der dargestellten Direktempfang-Doppler-LIDAR-Vorrichtung 10 ist weiter eine Intensitäts-Steuereinrichtung 22 zum Steuern von einem Detektor der Detektor-Anordnung 12 zu empfangenden Intensität vorgesehen.

Bei der Streuung an den Teilchen 17a. 17b und 17c unterscheidet man in diesem Zusammenhang einerseits die Streuung an Molekülen der Luft (Rayleigh-Streuung) und die Streuung an Aerosolen (Staubpartikel, Salzpartikel etc., Mie-Streuung). Die Rayleighstreuung kann zuverlässig in allen atmosphärischen Schichten und unabhängig von meteorologischen Einflüssen gemessen werden; sie ist nur abhängig von der Teilchendichte, welche kontinuierlich zu größeren Höhen abnimmt. Dagegen ist die Streuung an Aerosolen sehr stark von deren lokaler Dichte abhängig, die örtlich und insbesondere in Abhängigkeit von Wettereinflüssen und anderen Einflüssen stark variieren kann.

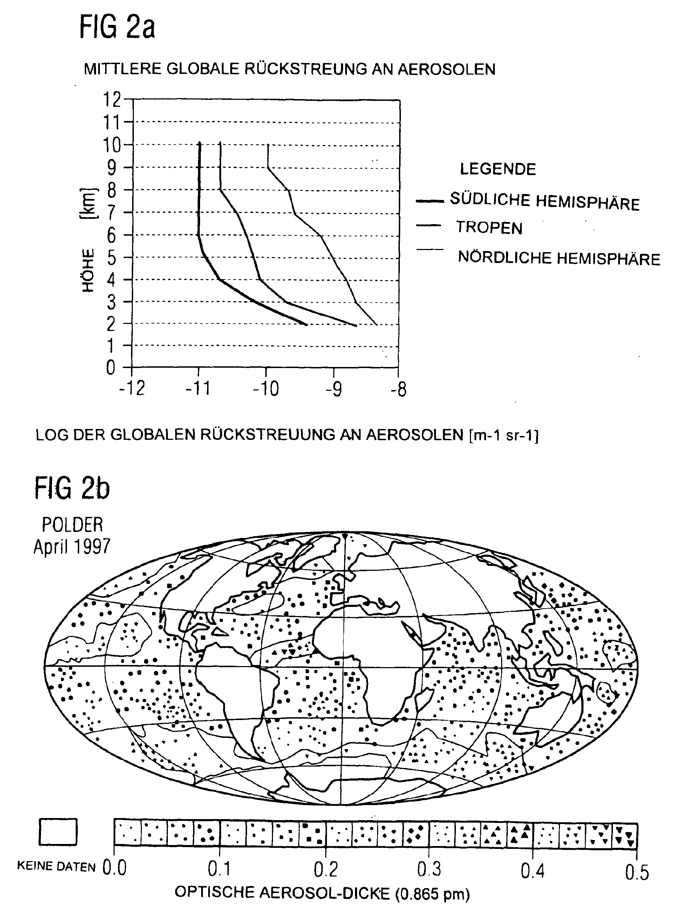

In den Fig. 2a und 2b sind unterschiedliche Aerosolstreuungen und Aerosolverteilungen veranschaulicht. Beispielsweise ist die Aerosolstreuung sehr stark in Gebieten mit hoher Schadstoffemission, wie beispielsweise in Industriegebieten oder vulkanischen Gebieten. Dagegen ist die Aerosolstreuung recht niedrig im Bereich von großen Gewässern, beispielsweise über den Ozeanen oder im Bereich der südlichen Hemisphäre der Erde, siehe Fig. 2a. Insbesondere werden die Aerosole aber auch durch beispielsweise starken Regen ausgewaschen, so dass deren Konzentration dann sehr gering sein kann.

Insgesamt nimmt die auf der Aerosoldichte beruhende Mie-Streuung überproportional gegenüber der Rayleighstreuung an Molekülen der Luft ab für eine Höhe größer als 2km; siehe Fig. 2b. Unter einer solchen Höhe von 2km ist die Mie-Streuung extrem umweltabhängig und teilweise sehr stark oder auch sehr gering möglich. Die Rayleighstreuung nimmt proportional mit der Dichte ab, also etwa auf 30% bei einer Höhe von 10 km. Für eine zuverlässige Messung von Turbulenzen etc. ist daher eine rein auf Aerosolen beruhende Messung nicht geeignet, vielmehr sollte die Rayleighstreuung auch gemessen werden können.

Da die Intensität der Rayleighstreuung proportional dem Kehrwert der Wellenlänge zur vierten Potenz ist, verwendet man sinnvollerweise eine Laserquelle 11 bei möglichst kurzer Wellenlänge, also beispielsweise im UV-Bereich.

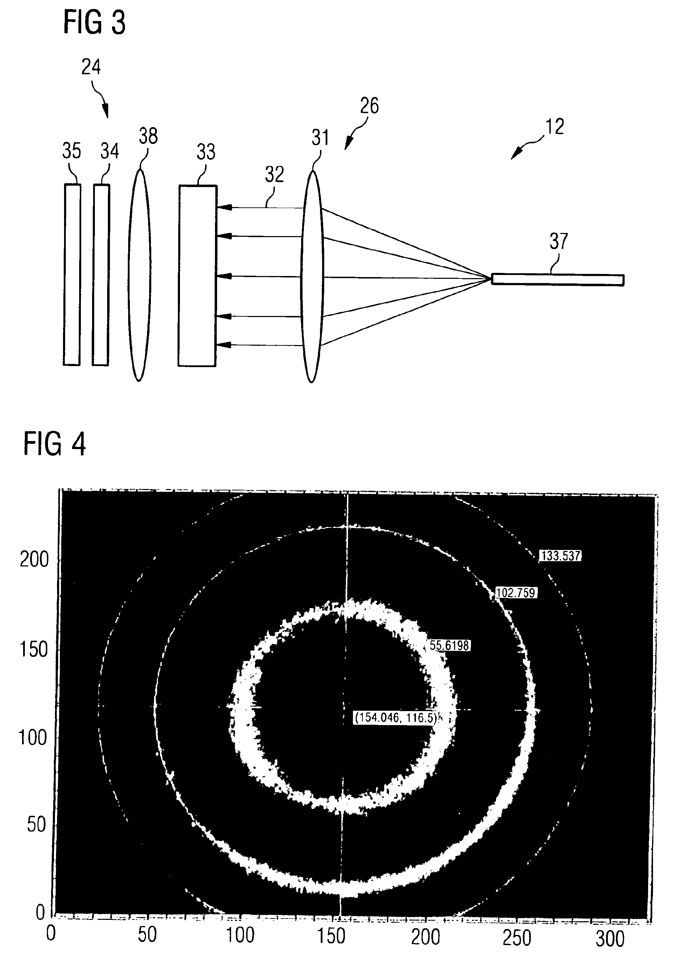

Ein Beispiel für die Detektor-Anordnung 12 der Direktempfang-Doppler-LIDAR-Vorrichtung 10 ist in Fig. 3 näher dargestellt. Die gestreute Strahlung - Streulicht 18 - wird über eine Optik 26 auf einen Detektor 35 geleitet und detektiert.

Zur Messung einer Frequenzverschiebung sind prinzipiell zwei Messmethoden denkbar. Bei einer hier nicht in Rede stehenden Messmethode, der sogenannten kohärenten Detektion, wird die feste Phasenbeziehung zwischen dem ausgesandten Laserstrahl hinreichend schmaler Linienbreite und der empfangenen Streustrahlung ausgenutzt. Aufgrund der Kohärenz ist dieses Messverfahren sehr empfindlich. Zur Messung der Frequenzverschiebung wird ein Teil des Laserstrahls vor Aussendung in die Atmosphäre umgeleitet, zeitverzögert und kollinear mit der empfangenen Streustrahlung auf einem Photodetektor hinreichend großer Bandbreite gemischt. Aufgrund der Nichtlinearität des Photodetektors kann die Differenzfrequenz als elektrisches Signal direkt abgegriffen werden, welche direkt der Dopplerverschiebung entspricht und daher der Relativgeschwindigkeit proportional ist.

Voraussetzung für diese Meßmethode ist eine hinreichend schmalbandige Laserquelle, so dass die Kohärenzlänge des Lichts größer als die Wegdifferenz zwischen verzögerter Referenzstrahlung und empfangener Streustrahlung ist. Weiter darf die Streustrahlung selbst aber zu keiner wesentlichen Linienverbreiterung beitragen, da ansonsten die Kohärenz zerstört würde. Typische Grenzwerte für die maximale Linienbreite sowie Verbreiterung bei Streuung liegen im Bereich einiger kHz oder MHz.

Nun ist die an Aerosolen gestreute Strahlung zwar nahezu gleich schmalbandig wie die einfallende Strahlung, dies gilt jedoch nicht für die an Molekülen gestreute Strahlung: Aufgrund der Boltzmannverteilung der Partikelgeschwindigkeiten bewegen sich die sehr leichten Moleküle bei üblichen Temperaturen weit über dem absoluten Nullpunkt mit hoher Geschwindigkeit (Brown'sche Molekularbewegung), welche zu einer erheblichen Dopplerverbreiterung alleine aufgrund dieses Effektes führt. Typische Werte liegen im Bereich um 3 GHz. Eine kohärente Detektion gemäß des oben beschriebenen Verfahrens (Mischung auf einem Photodetektor) ist daher für das hier interessierende Messverfahren nicht möglich.

Zur Messung der Rayleighstreuung (Streuung an Molekülen) wird daher bei dem hier dargestellten Verfahren und bei der hier dargestellten Direktempfang-Doppler-LIDAR-Vorrichtung 10 die in Fig. 3 dargestellte sogenannte Direktempfangstechnik verwendet, welche die Phase der Strahlung nicht benötigt und lediglich eine Intensitätsmessung vornimmt. Um die Doppler-Frequenzverschiebung zu bestimmen, ist ein weiteres Element vorgesehen, welches eine Frequenzdiskriminierung oder Wellenlängen-Dispersion aufweist.

Bei der in Fig. 3 dargestellten Detektor-Anordnung 12 wird hierzu die empfangene Strahlung 32 mittels einer Lichtleitfaser 37 der Detektor-Anordnung 12 zugeführt. Die empfangene Strahlung wird über eine erste Optik - Kollimationsoptik 31 - einem sogenannten Fabry-Perot-Etalon 33, welches zwei planparallele, teilreflektierende Platten oder eine einzelne planparallelen Platte mit Teilreflexion auf beiden Oberflächen aufweist, zugeführt, was durch Selbstüberlagerung der Welle in einem Resonator zu einer Interferenz der Welle mit sich selbst führt.

Auf diese Weise entsteht durch Abbildung mittels einer zweiten Optik 38 auf den Detektor 35 eine räumliche Intensitätsverteilung. In dem dargestellten Beispiel entsteht durch Vielfachreflexion eine kreisförmige Interferenzfigur - sogenannte Ringe oder engl. Fringes, siehe Fig. 4. Maxima und Minima entsprechen dabei jeweils Überlagerungen gleichen Winkels. Eine Änderung des Radius dieses Interferenzmusters ist direkt proportional der Änderung der Wellenlängen bzw. Frequenzänderung des detektierten Signals und damit der Änderung der Dopplershift und somit der Änderung der Relativgeschwindigkeit der Streupartikel, also beispielsweise der streuenden Teilchen 17a, 17b, 17c der Luft (Moleküle, Aerosole) gegenüber dem Messsystem. Beispielsweise lässt sich damit bei flugzeuggetragenen Systemen auch die Relativgeschwindigkeit der Luft in Bezug auf das Flugzeug 13 bestimmen.

Vergleicht man die Radien des Interferenzmusters beispielsweise mit einem gleichzeitig oder zu einem anderen Zeitpunkt gemessenen Signal des direkt abgeleiteten Lasersignals, so kann auch die absolute Relativgeschwindigkeit (im Unterschied zur vorher beschriebenen Änderung der Relativgeschwindigkeit) bestimmt werden. Erfolgt diese Messung gleichzeitig oder hintereinander in unterschiedliche Raumrichtungen (Aussenden des Laserstrahls in unterschiedliche Raumrichtungen und Messung der Rückstreuung daraus), so kann der zwei- oder auch dreidimensionale relative Geschwindigkeitsvektor bestimmt werden. Entsprechend können die hier vorgeschlagenen Prinzipien und Lösungen für eine oder mehrere Messrichtungen angewandt werden.

Statt des hier beschriebenen Fabry-Perot-Interferometers können auch andere frequenzdiskriminierende Elemente oder andere Interferometer verwendet werden, bspw. Michelson-Interferometer, Fizeau-Interferometer o.ä.

Dieses in Fig. 4 als Beispiel dargestellte Interferenzmuster ist nun mit einem geeigneten Detektor 35, siehe Fig. 3, aufzunehmen. Der Detektor 35 kann unterschiedlich aufgebaut sein. Verschiedene Lösungen beinhalten die Verwendung von Filtern an den Kanten der Interferenzmaxima, dem Interferenzmuster nachempfundene konzentrische Ringelektroden eines Photomultipliers, die Umformung des kreisförmigen Musters in ein lineares mittels beispielsweise Faseroptik und Detektion mit einem CCD-Zeilendetektor oder die Detektion mit einem zweidimensionalem Photo-Detektor (beispielsweise CCD-Kamera). Für die dargestellte Direktempfang-Doppler-LIDAR-Vorrichtung 10 sind alle diese Detektoren und auch andere geeignet. Der Einfachheit halber wird die Direktempfang-Doppler-LIDAR-Vorrichtung 10 sowie ein damit durchführbares Messverfahren jedoch am Beispiel der Verwendung einer CCD-Kamera als Detektor 35 mit einer vorgeschalteten Mikrokanalplatte 34 zur Verstärkung weiter beschrieben.

Typischerweise ist das detektierte Rückstreusignal sehr schwach, kann aber in der Intensität wesentlich schwanken, einerseits durch Änderungen der Luftdichte und damit der Anzahl der rückstreuenden Moleküle im Messvolumen, andererseits durch im Messvolumen befindliche Aerosole.

Es ist anzumerken, dass das hier beschriebene Direktempfangs-Detektionsverfahren sowie die hier beschriebene Direktempfang-Doppler-LIDAR-Vorrichtung 10 durchaus die Messung in absolut aerosolfreier Atmosphäre ermöglicht (reine Rayleigh-Streuung), dass darüber hinaus aber auch die Streuung an Aerosolen detektiert und ausgewertet werden kann. In diesem Falle ist sogar mit einem sehr starken Rückstreusignal zu rechnen.

Während die Unterschiede durch die Luftdichteänderungen typisch eine Größenordnung oder weniger betragen (je nach maximaler Flughöhe), betragen die Schwankungen durch aerosolhaltige/aerosolarme Rückstreuung mehrere Größenordnungen (Extremfälle: Kumuluswolke und große Flughöhe), so dass insgesamt das detektierte Signal um mehrere Größenordnungen schwanken kann.

Weiter kann bei einer Umschaltung von Messentfernung und Messtiefe ebenfalls die Rückstreuintensität schwanken.

Diese möglichen Schwankungen des Messsignals um mehrere Größenordnungen liegt typischerweise weit über dem Dynamikbereich der Sensoren des Detektors 35. Bei dem hier beschriebenen Messverfahren werden weitere Maßnahmen ergriffen, um den erforderlichen Dynamikbereich zu erreichen.

Eine erste, naheliegende Lösung wäre die Abschwächung des Empfangssignals in Abhängigkeit von dessen Stärke. Diese naheliegende Lösung ist aber aus mehreren Gründen unvorteilhaft: Absorbierende Abschwächer müssten gegebenenfalls mechanisch bewegt werden. Elektrisch ansteuerbare Abschwächer beruhen meist auf der Transmission von polarisiertem Licht, wohingegen das empfangene Rückstreusignal höchstens teilpolarisiert ist und zudem meist nichtpolarisationserhaltende Elemente der Strahlübertragung verwendet werden. Weiter wäre der genaue Wert der Abschwächung zur Bestimmung bestimmter Parameter wichtig (Rückrechnung auf die tatsächliche Signalintensität), was bei Absorbern oder anderen Abschwächern nur schwer zu bestimmen ist.

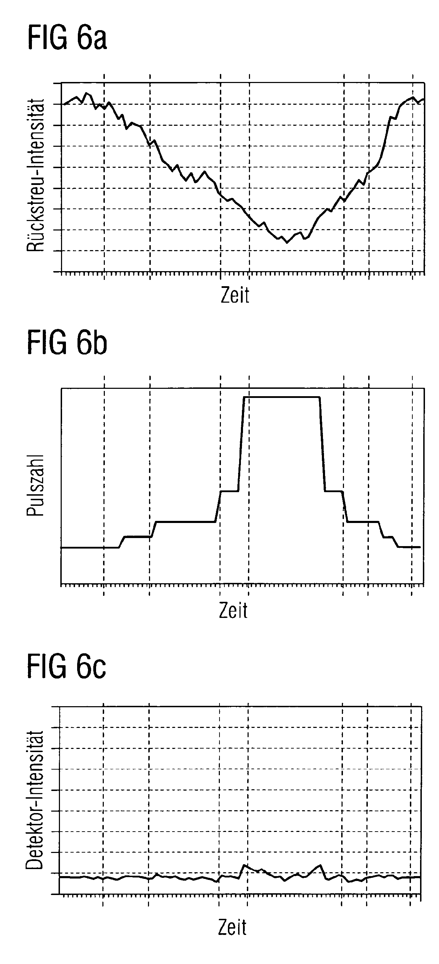

Es wird daher ein anderer Lösungsweg vorgeschlagen, um den Dynamikbereich des Eingangssignals (in Fig. 6a als Intensität über die Zeit skizziert) wesentlich zu erweitern. Vorteilhafterweise soll zudem eine definierte Abschwächung in digitaler Form ermöglicht werden, so dass zudem auch die exakte Signalintensität aus der detektierten Intensität und dem digital festgelegten Abschwächungsverhältnis rückgerechnet werden kann. Weiter lassen sich in vorteilhaften Ausgestaltungen der Direktempfang-Doppler-LIDAR-Vorrichtung 10 sowie des damit durchführbaren Direktempfang-Doppler-LIDAR-Messverfahrens zugleich Störparameter wie Hintergrundlicht etc. minimieren.

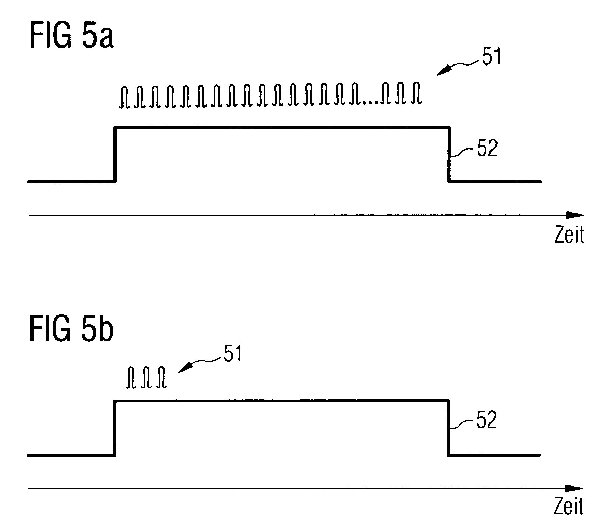

Ein Grundprinzip der hier vorgestellten Direktempfang-Doppler-LIDAR-Vorrichtung 10 und des damit durchführbaren Verfahrens beruht darauf, dass zur Geschwindigkeitsmessung nicht wie üblich Einzelpulse pro Messung verwendet werden, sondern es werden Pulszüge bzw. viele Laserpulse 51 (Fig. 5a und b) eines hochrepetierenden Lasers (typisch im kHz-Bereich) verwendet, welche auf dem Detektor 35 zu einer einzigen Messung integriert werden. Dies ist schematisch in den Fig. 5a und 5b gezeigt, wobei die Laserpulse 51 und das Messintervall 52 (Dauer des Messzyklus) über die Zeit dargestellt sind. Die Belichtungszeiten liegen dabei typischerweise bei etwa 10ms pro Messung, allgemeiner zwischen etwa 1 ms und 100ms.

Bei dem hier dargestellten Ausführungsbeispiel des Messverfahrens zur Geschwindigkeitsmessung mittels Direktempfang-Doppler-LIDAR wird weiter die ansteuerbare Schalteinrichtung 24 verwendet, welcher so angesteuert wird, dass die Anzahl der aufintegrierten Laserpulse 51 gesteuert werden kann. Zur Veranschaulichung ist in Fig. 5a eine große Pulszahl der Laserpulse 51 pro Messung 52 bei geringer Rückstreuung und in Fig. 5b eine kleine Pulszahl der Laserpulse 51 pro Messung 52 bei starker Rückstreuung dargestellt.

In Abhängigkeit der empfangenen Rückstreuintensität wird zum Beispiel eine definierte, aber pro Messung individuell einstellbare Anzahl von Laserpulsen 51 aufintegriert. Bei einer alternativen Vorgehensweise wird der Detektor 35 selbst, soweit dieser ansteuerbar ist, entsprechend angesteuert. Eine weitere Verfahrensweise zur Steuerung der aufzuintegrierenden Laserpulse 51 beinhaltet die Ansteuerung des Detektorausgangs.

Zur Veranschaulichung sind in Fig. 6a ein empfangenes Rückstreusignal mit starker Dynamik, in Fig. 6b die Anzahl der jeweils zu detektierenden Laserpulse 51 und in Fig. 6c die relativ gleichmäßige Intensität auf dem Detektor 35 dargestellt.

Auf diese Weise wird eine Übersteuerung des Detektors 35 vermieden. Zugleich wird bei schwächeren Signalen eine optimale Anzahl von Pulsen aufintegriert. Die Intensität wird in definierten Schritten einzelner Laserpulse reduziert, so dass die gemessenen Intensität zur Rekonstruktion der tatsächlichen Rückstreuintensität lediglich auf die volle Pulszahl rückgerechnet werden muss.

Eine bevorzugte Anordnung sieht beispielsweise eine Laserpulsrate von 20 kHz bei Belichtungszeiten (Integrationszeiten) des Detektors von 16 ms pro Messung vor, so dass in diesem Falle bis zu 333 Pulse zu einer Messung integriert werden können. Im Falle sehr starker Rückstreuung kann die Anzahl aufzuintegrierender Pulse bis auf einen einzelnen Puls reduziert werden. Auf diese Weise wird zusätzlich zur Dynamik des Detektors 35 eine weitere Dynamik von über 333 erreicht, welche mit der Detektordynamik zur Gesamtsystemdynamik zu multiplizieren ist. Typische Werte für Detektordynamik liegen bei etwa 100; die Gesamtdynamik beträgt dann bis zu mehr als vier Größenordnungen.

Diese Anordnung ist besonders vorteilhaft, insbesondere bei Verwendung einer Schalteinrichtung 24 vor dem Detektor 35. In dem in Fig. 3 dargestellten Beispiel ist eine solche Schalteinrichtung 24 im wesentlichen durch eine sehr schnell schaltbare Mikrokanalplatte 34 gebildet.

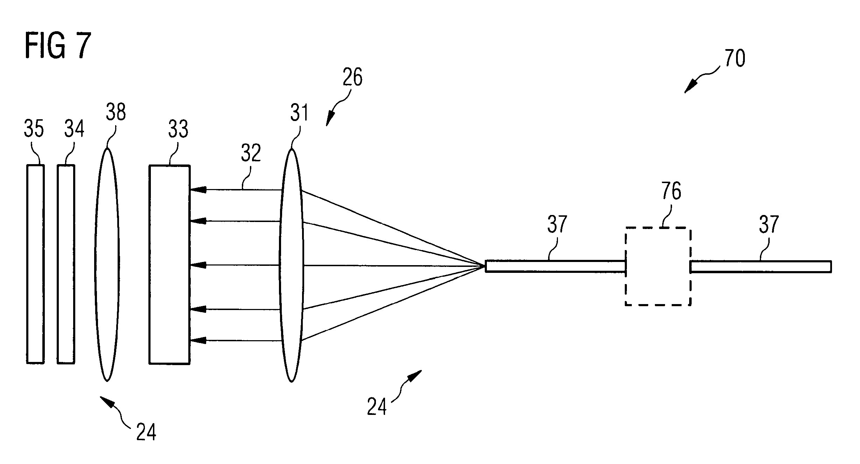

Ein gegenüber der Ausführungsform der Detektor-Anordnung 12 von Fig. 3 erweiterte Ausführungsform einer Detektor-Anordnung 70 ist in Fig. 7 dargestellt, wobei für entsprechende Elemente die gleichen Bezugsziffern verwendet worden sind. In Fig. 7 weist die Schalteinrichtung 24 die Mikrokanalplatte 34 vor dem Detektor 35 (beispielsweise vor einer CCD-Kamera) sowie einen faseroptischen oder elektrooptischen Schalter 76 im Empfangspfad der Lichtleitfaser 37 auf. Die Mikrokanalplatte 34 kann auch weggelassen oder in einer anderen Funktion, beispielsweise als Intensitätsverstärker, verwendet werden.

Die Intensitäts-Steuereinrichtung 22 steuert demnach die Anzahl der zu dem Detektor 35 durchgelassenen Laserpulse durch die vor dem Detektor 35 angeordnete Schalteinrichtung 24. Alternativ oder zusätzlich steuert die Intensitäts-Steuereinrichtung 22 die Anzahl der zu integrierenden Pulse durch Ansteuerung des Detektors 35 selbst.

Auf die verschiedenen dargestellten Weisen kann die Schaltzeit für Detektion nun auch gerade so kurz gewählt werden, dass das erwartete und gewünschte Streusignal aufgenommen wird, wobei davor und danach jedoch keine Detektion stattfindet, so dass der Hintergrundlichteinfluss minimiert werden kann.

Bezüglich der schnell schaltbaren Mikrokanalplatte 34 sei angemerkt, dass diese vorzugsweise entweder durch Ansteuerung der Beschleunigungsspannung oder durch Ansteuerung einer Gate-Elektrode, meist eine netzförmige Elektrode auf der Photokathode, oder durch beides zugleich geschaltet werden kann. Die Schaltzeiten liegen typischerweise im Nanosekunden-Bereich oder darunter (zumindest für die Gateelektrode).

Eine andere, in den Zeichnungen nicht näher dargestellte Ausführung, die den vorerwähnten Vorteil einer Minimierung des Hintergrundlichteinflusses nicht aufweist, jedoch ebenfalls anwendbar ist, ist eine Anordnung, bei der die Anzahl der ausgesendeten Laserpulse gesteuert wird (im Gegensatz zur oben beschriebenen Steuerung der Anzahl der empfangenen Laserpulse). Dies kann wiederum entweder durch inhärente Steuerung des Lasers (z.B. mittels eines - nicht dargestellten - Güteschalters in der Laserquelle 11) oder durch einen am Laserausgang angebrachten schnellen Schalter (elektrooptischer Schalter, Faserschalter; ebenfalls nicht dargestellt) erzielt werden.

Um die gewünschte Anzahl der zu detektierenden Pulse zu bestimmen, ist gemäß einer beispielhaften Ausgestaltung der Direktempfang-Doppler-LIDAR-Vorrichtung 10 und des Messverfahrens vorgesehen, die Intensität auf dem Detektor 35 zu messen und entsprechend keine Pulse mehr weiter aufzuintegrieren (z.B. den Schalter 76 geschlossen zu halten, die Mikrokanalplatte 34 entsprechend zu schalten o.a.), wenn die erforderliche Intensität erreicht ist. Im Falle einer CCD-Kamera ist diese Intensitätsmessung jedoch nicht während der Integration möglich, da zur Bestimmung der Intensität der CCD-Chip ausgelesen werden muss. Eine Möglichkeit besteht aber darin, die Intensität des jeweils letzen Messzyklus zur Intensitätsmessung zu verwenden und darauf basierend die Sollzahl der aufzuintegrierenden Pulse für die nächste Detektion zu bestimmen (welche größer, kleiner oder gleich wie die vorige Pulszahl sein kann). Wenn in mehreren Messrichtungen gemessen wird, ist dies für jede Messrichtung gesondert durchzuführen.

Wird zudem noch ein Referenzsignal (direktes Lasersignal) von Zeit zu Zeit gemessen, kann dieses Verfahren auch für das Referenzsignal durchgeführt werden und eine optimale Detektorintensität auch bei schwankender Laserleistung erzielt werden. Das beschriebene Verfahren der Verwendung des jeweils letzten Messwerts funktioniert immer dann gut, wenn die Intensitätsänderungen langsam im Vergleich zur Messrate sind. Schnelle Intensitätsänderungen können so nicht oder zumindest nicht vollständig erfasst werden. Es kann dann durchaus vorkommen, dass trotzdem eine Messung überstrahlt ist oder eine zu geringe Intensität aufweist. In diesem Falle ist das beschriebene Vorgehen konsekutiv zu wiederholen, bis man sich im gewünschten Sensitivitätsbereich befindet, oder aber anhand einer Schätzung ein größerer Sprung vorzusehen. Für typische Anwendungen ist dies jedoch hinreichend. Insbesondere werden keine zusätzlichen Detektoren benötigt und die Intensität kann sehr einfach aus dem Detektorsignal selbst abgeleitet werden. Ein entsprechender Zähler - beispielsweise durch Hard- oder Software in der Intensitäts-Steuereinrichtung 22 realisiert und daher nicht näher dargestellt - wird dann je nach bestimmter Signal-Intensität der letzten Messung mit einem entsprechenden Wert der für die nächste Messung aufzuintegrierenden Pulszahl beaufschlagt. Diese Werte können kontinuierlich sein. Eine andere Möglichkeit besteht darin, eine stufenweise Anpassung der zu integrierenden Pulszahl vorzugeben (beispielsweise Verdopplung/Halbierung: 1-2-4-8-16-32-65-128-256-MAX Pulszahl oder additive Erhöhung/Subtraktion 1-31-61-91-...). Es kann jedoch auch aus dem gemessenen Intensitätswert und dem gewünschten ein direkter Proportionalfaktor abgeleitet werden.

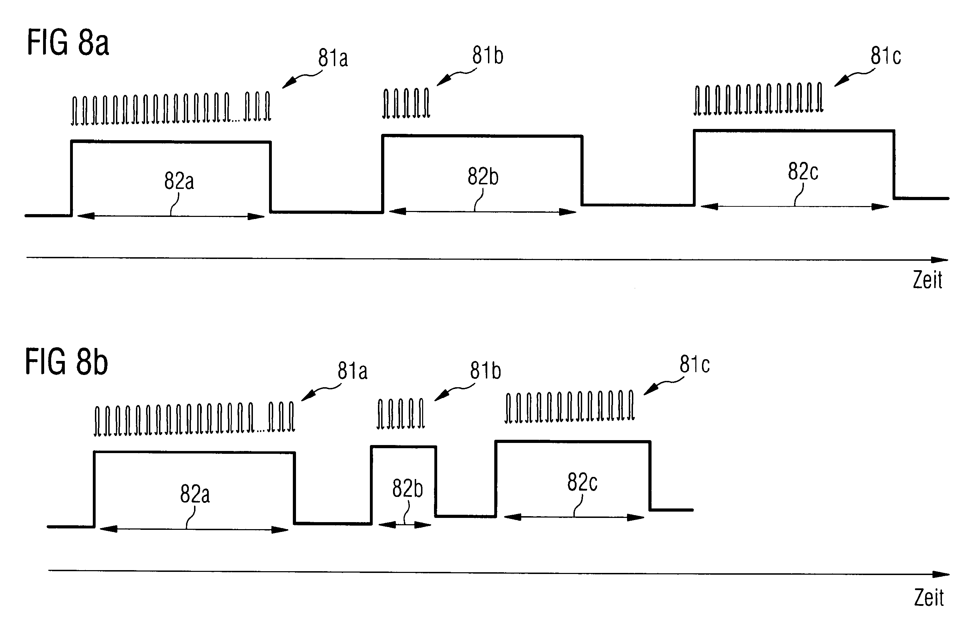

In Fig. 8a und 8b sind unterschiedliche Möglichkeiten zur Auslesung des Detektors 35 dargestellt. In dem Beispiel sind bei drei aufeinanderfolgenden Messungen unterschiedliche Anzahlen von Laserpulsen 81 a, 81 b, 81 c aufgenommen worden. Mit 82a, 82b und 82c sind die Gesamt-Integrationszeiten bei der ersten bis dritten Messung bezeichnet.

Wie aus Fig. 8a ersichtlich kann die Gesamt-Integrationszeit 82a, 82b, 82c des Detektors 35 bei einer ersten Verfahrensweise unabhängig von der Anzahl der aufzuintegrierenden Laserpulse bzw. der Länge des aufzuintegrierenden Pulszugs (bei 81 a, 81 b, 81 c) fest vorgegeben sein. Fig. 8a zeigt somit eine Verfahrensweise zum Auslesen des Detektors 35 mit festem Auslesetakt.

Fig. 8b zeigt eine Verfahrensweise zum Auslesen des Detektors 35, bei dem die Gesamt-Integrationszeit 82a, 82b, 82c abhängig von der gemessenen Signalintensität ist. Wie bei Fig. 8b bei der mit b bezeichneten Messung dargestellt, können für den Fall ausreichender Intensität bereits wenige Laserpulsen 81 b zur Erzielung der gewünschten Intensität ausreichen, so dass die Gesamt-Integrationszeit 82b (Belichtungszeit) im Vergleich zu der ersten Messung mit der Gesamt-Integrationszeit 82a verkürzt werden kann. Die Auslesung erfolgt dann nach Erreichen der gewünschten Intensität oder nach Erreichen einer aufgrund der Vormessung zu erwartenden Intensität. Die Gesamt-Integrationszeit 82a, 82b, 82c wird gegebenenfalls durch eine vorgegebene Maximalzeit limitiert.

In einem wie oben beschriebenen LIDAR-System soll oftmals nicht nur die Änderung der Geschwindigkeit, sondern die Geschwindigkeit selbst gemessen werden. Hierzu wäre die Messung der zeitliche Änderung des Interferenzsignals alleine noch nicht ausreichend. Zum Beispiel wird zur Messung der Geschwindigkeit selbst die Änderung des Interferenzsignals in Bezug auf einen Bezugspunkt (zum Beispiel bekannte Geschwindigkeit oder Geschwindigkeit gleich Null) gemessen. Eine Möglichkeit unter Verwendung der hier dargestellten Direktempfang-Doppler-LIDAR-Vorrichtung 10 besteht im wesentlichen darin, einen Teil des ausgesandten Laserlichts - Laserstrahl 15 - direkt (d.h. ohne Aussenden in die Atmosphäre) in die Detektor-Anordnung 12 zu koppeln. Da dieser Teil des Laserlichts keine Streuung an relativ zum System bewegten Partikeln - Teilchen 17a, 17b, 17c - erfährt, beträgt hier die Dopplerverschiebung 0. Das Signal kann damit als Nullpunkts-Referenzsignal verwendet werden.

Bei einer Ausführung des hier dargestellten Messverfahrens wird dieses Signal nun so gewonnen, dass ein Teil des ausgesandten Signals auf den Detektor 35 geleitet wird und die Anzahl der detektierten Laserpulse 51 nun so gewählt wird, dass keine Sättigung des Detektors 35 auftritt. Typischerweise ist das direkt zugeführte Signal wesentlich intensiver als das aus der Rückstreuung aus der Atmosphäre gewonnene Signal, so dass auch hier die hier dargestellte Lösung wesentlich zur Verhinderung einer Detektorsättigung und damit Gewinnung eines guten Referenzsignals beiträgt. Diese Messung des Referenzsignals kann nun periodisch oder zufällig im gesamten Messvorgang der LIDAR-Messung erfolgen.

### Bezugzeichenliste:

- 10: Direktempfang-Doppler-LIDAR-Vorrichtung
- 11: Laserquelle
- 12: Detektor-Anordnung
- 13: Flugzeug
- 14: Fenster
- 15: ausgesendeter Laserstrahl
- 16: Atmosphäre
- 17a: Teilchen der Luft
- 17b: Teilchen der Luft
- 17c: Teilchen der Luft
- 18: Streulicht
- 19: Auswerteeinrichtung
- 22: Intensitäts-Steuereinrichtung
- 24: Schalteinrichtung
- 26: Optik
- 31: Kollimationsoptik
- 32: empfangene Strahlung
- 33: Fabry-Perot-Etalon
- 34: Mikrokanalplatte
- 35: Detektor
- 37: Lichtleitfaser
- 38: zweite Optik
- 51: Laserpulse
- 52: Messung
- 70: Detektor-Anordnung
- 76: Schalter
- 81a: Laserpulse erste Messung
- 81b: Laserpulse zweite Messung
- 81 c: Laserpulse dritte Messung
- 82a: Gesamt-Integrationszeit erste Messung
- 82b: Gesamt-Integrationszeit zweite Messung
- 82c: Gesamt-Integrationszeit dritte Messung

## Patentansprüche

1. Verfahren zur Doppier-LIDAR-Messung von Geschwindigkeiten mittels Direktempfang für ein Luftfahrzeug zum direkten Einkoppeln der Messsignale in die Flugsteuerung des Luftfahrzeugs, um eine äußere Strömungsänderung auszuregeln, wobei ein Laserstrahl (15) auf das zu messende Medium (16) gerichtet wird und von dem Medium (16) daraufhin abgestrahlte Strahlung (18) mittels eines Detektors (35) gemessen wird, umfasssend die Schritte:
a) Aussenden einer Vielzahl von Laserpulsen pro Messung (52) und
b) Aufintegration einer Vielzahl von mit dem Detektor (35) empfangener Laserpulse (51, 81a, 81b, 81c) pro Messung (52), wobei die Laserpulse mit einer Repetitionsrate ausgesandt werden, die um eine oder mehrere Größenordnungen über der Detektionsrate liegt,
und wobei die Laserpulse pro Messung mit einer Frequenz von größer oder gleich etwa 1 kHz ausgesandt werden,
**gekennzeichnet durch** den Schritt:
c) Steuerung der Anzahl der auf dem Detektor (35) pro Messung zu integrierenden oder integrierten Laserpulse (51, 81 a, 81 b, 81 c),
wobei die Steuerung in Abhängigkeit von der Intensität der von dem Medium (16) kommenden Strahlung (18) erfolgt.

2. Verfahren nach Anspruch 1,
**dadurch gekennzeichnet,**
**dass** mittels der Steuerung der Anzahl der auf dem Detektor (35) zu integrierenden oder integrierten Laserpulse (51, 81 a, 81 b, 81 c) die Gesamtintensität der empfangenen Strahlung eingestellt wird.

3. Verfahren nach einem der Ansprüche 1 oder 2,
**dadurch gekennzeichnet,**
**dass** Schritt c) wenigstens einen der folgenden Teilschritte umfasst:
c1) Steuerung einer die Laserpulse aussendenden Laserquelle (11) derart, dass eine definierte, veränderbare Anzahl von Laserpulsen ausgesandt wird;
c2) Steuerung der Anzahl der auf das Medium (16) gerichteten Laserpulse mittels einer der Laserquelle (11) nachgeschalteten steuerbaren ersten Schalteinrichtung;
c3) Steuerung des Detektors (35) derart, dass empfangene Laserpulse (51, 81 a, 81 b, 81 c) ausgeblendet oder nicht mit aufintegriert werden; und/oder
c4) Steuerung der Anzahl der von dem Detektor (35) empfangenen Laserpulse (51, 81 a, 81 b, 81 c) mittels einer dem Detektor (35) vorgeschalteten steuerbaren zweiten Schalteinrichtung (24).

4. Verfahren nach einem der Ansprüche 1 bis 3,
**dadurch gekennzeichnet,**
**dass** die Steuerung derart erfolgt, dass eine hohe Signalintensität unterhalb einer Übersteuerungsschwelle des Detektors (35) erhalten wird.

5. Verfahren nach einem der Ansprüche 1 bis 4,
**dadurch gekennzeichnet,**
**dass** Schritt c) umfasst:
ca) Vergleichen eines aktuellen Messwerts mit einem vorgegebenen oberen Schwellwert für eine zu hohe Intensität und Erniedrigen der Anzahl der aufintegrierten Laserpulse (51, 81 a, 81 b, 81 c) für eine nachfolgenden Messung, falls der aktuelle Messwert den oberen Schwellwert überschreitet, und/oder
cb) Vergleichen eines aktuellen Messwerts mit einem vorgegebenen unteren Schwellwerts für eine zu niedrige Intensität und Erhöhen der Anzahl der aufintegrierten Laserpulse (51, 81 a, 81 b, 81 c) für eine nachfolgende Messung, falls der aktuelle Messwert den unteren Schwellwert unterschreitet.

6. Verfahren nach Anspruch 5,
**dadurch gekennzeichnet,**
**dass** die Teilschritte ca) und cb) in unmittelbar oder mittelbar aufeinanderfolgenden Messungen wiederholt durchgeführt werden, bis der aktuelle Messwert zwischen dem oberen und dem unteren Schwellwert liegt.

7. Verfahren nach einem der Ansprüche 5 oder 6,
**dadurch gekennzeichnet,**
**dass** die Veränderung der Anzahl von auf dem Detektor zu integrierenden oder integrierten Laserpulse (51, 81 a, 81 b, 81 c) um einen konstanten Faktor oder um einen konstanten additiven/subtraktiven Betrag oder proportional zu einer Abweichung von einem vorbestimmten Idealwert erfolgt.

8. Verfahren nach einem der Ansprüche 1 bis 7,
**dadurch gekennzeichnet,**
**dass** Schritt c) umfasst:
cd) Abschätzen einer zu erwartenden Intensität des Messsignals aus dem bisherigen Verlauf der Messsignalintensität und
ce) Einstellen der Anzahl der auf dem Detektor zu integrierenden Laserpulse (51, 81 a, 81 b, 81 c) aufgrund dieser Abschätzung.

9. Verfahren nach einem der voranstehenden Ansprüche,
**gekennzeichnet durch**
d1) Auslesen des Detektors (35) mit einer konstanten Detektionsrate unabhängig von der Anzahl der integrierten Laserpulse (51, 81 a, 81 b, 81 c) oder
d2) Auslesen des Detektors (35) nach Erreichen einer vorbestimmten Intensität.

10. Direktempfang-Doppler-LIDAR-Vorrichtung (10) für ein Luftfahrzeug zum Messen von Geschwindigkeiten mittels Direktempfang-Doppler-LIDAR und zum direkten Einkoppeln der Messsignale in die Flugsteuerung des Luftfahrzeugs, um eine äußere Strömungsänderung auszuregeln, mit einer Laserquelle (11) zum Aussenden von Laserstrahlung (15) auf ein zu messendes Medium (16), einem Detektor (35) zum Empfangen von Strahlung (18), die bei Bestrahlung mit der Laserstrahlung (15) von dem Medium (16) abgestrahlt, insbesondere gestreut, wird, und einer Auswerteeinrichtung (19), welche aufgrund der von dem Detektor (35) empfangenen Strahlung wenigstens eine Geschwindigkeit des Mediums (16) bestimmt,
wobei die Laserquelle (11) zum Aussenden einer Vielzahl von Laserimpulsen pro Messung (52) des Detektors (35) ausgebildet ist und
wobei der Detektor (35) zum Integrieren einer Vielzahl von Laserpulsen (51, 81 a, 81 b, 81 c) pro Messung (52) ausgebildet ist,
wobei die Laserquelle (11) zum Aussenden der Laserpulse mit einer Repetitionsrate ausgebildet ist, die eine oder mehrere Größenordnungen über der Detektionsrate des Detektors (35) liegt,
und wobei die Laserpulse pro Messung mit einer Frequenz von größer oder gleich etwa 1 kHz ausgesandt werden,
**dadurch gekennzeichnet,**
**dass** eine Intensitäts-Steuereinrichtung (22) vorgesehen ist, mittels derer die Anzahl der auf dem Detektor pro Messung zu integrierenden Laserpulse (51, 81 a, 81 b, 81 c) steuerbar ist,
wobei die Steuerung in Abhängigkeit von der Intensität der von dem Medium (16) kommenden Strahlung (18) erfolgt.

11. Direktempfang-Doppler-LIDAR-Vorrichtung nach Anspruch 10,
**dadurch gekennzeichnet,**
a) **dass** die Laserquelle (11) durch die Intensitäts-Steuereinrichtung (22) derart steuerbar ist, dass sie eine mittels der Intensitäts-Steuereinrichtung (22) einstellbare Anzahl von Laserpulsen aussendet und/oder
b) **dass** der Detektor (35) durch die Intensitäts-Steuereinrichtung (22) derart steuerbar ist, dass empfangene Laserpulse (51, 81 a, 81 b, 81 c) ausgeblendet oder nicht mit aufintegriert werden, und/oder
c) **dass** die Intensitäts-Steuereinrichtung (22) zum Steuern einer ersten Schalteinrichtung ausgebildet ist, die der Laserquelle (11) nachgeordnet ist, um eine Anzahl von auf das Medium (16) gerichteter Laserpulse einzustellen und/oder
d) **dass** die Intensitäts-Steuereinrichtung (22) zum Steuern einer zweiten Schalteinrichtung (24) ausgebildet ist, die dem Detektor (35) vorgeschaltet ist, um eine Anzahl empfangbarer von dem Medium (16) kommender Laserpulse (51, 81 a, 81 b, 81 c) einzustellen.

12. Direktempfang-Doppler-LIDAR-Vorrichtung nach Anspruch 11,
**dadurch gekennzeichnet,**
**dass** die Laserquelle (11) einen durch die Intensitäts-Steuereinrichtung (22) ansteuerbaren Güteschalter zur Steuerung der Anzahl der zu integrierenden Laserpulse aufweist.

13. Direktempfang-Doppler-LIDAR-Vorrichtung nach einem der Ansprüche 11 oder 12,
**dadurch gekennzeichnet,**
**dass** die erste und/oder die zweite Schalteinrichtung (24) einen elektrooptischen Schalter und/oder einen elektromechanischen Schalter und/oder einen faseroptischen Schalter (76) aufweisen.

14. Direktempfang-Doppler-LIDAR-Vorrichtung nach einem der Ansprüche 11 bis 13,
**dadurch gekennzeichnet,**
**dass** eine Mikrokanalplatte (34) vor dem Detektor (35) vorgesehen ist, die mittels der Intensitäts-Steuereinrichtung (22) ansteuerbar ist.

15. Direktempfang-Doppler-LIDAR-Vorrichtung nach einem der Ansprüche 10 bis 14,
**dadurch gekennzeichnet,**
**dass** eine Erfassungseinrichtung, insbesondere ein Zähler, zum Erfassen der Anzahl pro Messzyklus abgesandter und/oder empfangener Laserpulse vorgesehen ist und dass die Auswerteeinrichtung (19) zur Bestimmung der tatsächlichen Signalintensität aus der durch die Erfassungseinrichtung erfassten Anzahl und aus der durch den Detektor (35) gemessenen Signalintensität ausgebildet ist.

## Claims

1. Method for Doppler LIDAR measurement of speeds by means of direct reception for an aircraft in order to directly inject the measurement signals into the flight control of the aircraft in order to regulate out an external flow change, wherein a laser beam (15) is directed at the medium (16) to be measured, and radiation (18) which is then emitted by the medium (16) is measured by means of a detector (35), comprising the steps:
a) transmission of a multiplicity of laser pulses per measurement (52) and
b) integration of a multiplicity of laser pulses (51, 81 a, 81 b, 81 c), received by the detector (35), per measurement (52),
wherein the laser pulses are transmitted at a repetition rate which is one or more orders of magnitude greater than the detection rate,
and wherein the laser pulses for each measurement are transmitted at a frequency of greater than or equal to about 1 kHz, **characterized by** the step:
c) control of the number of the laser pulses (51, 81a, 81 b, 81c) which are integrated or are to be integrated on the detector (35) per measurement,
wherein the control process is carried out as a function of the intensity of the radiation (18) coming from the medium (16).

2. The method according to claim 1,
**characterized**
**in that** the total intensity of the received radiation is adjusted by controlling the number of laser pulses (51, 81a, 81 b, 81c) which are integrated or are to be integrated on the detector (35).

3. The method according to any of the claims 1 or 2,
**characterized**
**in that** step c) comprises at least one of the following partial steps:
c1) control of a laser source (11) which transmits the laser pulses, such that a defined, variable number of laser pulses are transmitted;
c2) control of the number of laser pulses which are directed at the medium (16), by means of a controllable first switching device which is connected downstream from the laser source (11);
c3) control of the detector (35) such that received laser pulses (51, 81a, 81 b, 81 c) are masked out or are not integrated; and/or
c4) control of the number of laser pulses (51, 81a, 81 b, 81 c) received by the detector (35), by means of a controllable second switching device (24), which is connected in front of the detector (35).

4. The method according to any of the claims 1 to 3,
**characterized**
**in that** the control process is carried out such that a high signal intensity is obtained, below an overdriving threshold of the detector (35).

5. The method according to any of the claims 1 to 4,
**characterized**
**in that** step c) comprises:
ca) comparison of a current measured value with a predetermined upper threshold value for an excessively high intensity, and reduction in the number of integrated laser pulses (51, 81a, 81 b, 81 c) for a subsequent measurement, if the current measured value is above the upper threshold value, and/or
cb) comparison of a current measured value with a predetermined lower threshold value for an excessively low intensity, and increasing the number of integrated laser pulses (51, 81a, 81 b, 81 c) for a subsequent measurement if the current measured value is below the lower threshold value.

6. The method according to claim 7,
**characterized**
**in that** the step elements ca) and cb) are carried out repeatedly in directly or indirectly successive measurements until the current measured value is between the upper and the lower threshold value.

7. The method according to any of the claims 5 or 6,
**characterized**
**in that** the number of laser pulses (51, 81 a, 81 b, 81 c) which are integrated or are to be integrated on the detector is varied by a constant factor or by a constant additive/subtractive amount, or in proportion to a discrepancy from a predetermined ideal value.

8. The method according to any of the claims 1 to 7,
**characterized**
**in that** step c) comprises:
cd) estimation of an intensity of the measurement signal to be expected from the previous profile of the measurement signal intensity, and
ce) selection of the number of laser pulses (51, 81 a, 81 b, 81 c) which are to be integrated on the detector, on the basis of this estimate.

9. The method according to any of the preceding claims,
**characterized by**
d1) reading of the detector (35) at a constant detection rate independently of the number of integrated laser pulses (51, 81 a, 81 b, 81c), or
d2) reading of the detector (35) after a predetermined intensity has been reached.

10. Direct reception Doppler LIDAR apparatus (10) for an aircraft for measuring speeds by means of direct reception Doppler LIDAR and for directly injecting the measurement signals into the flight control of the aircraft in order to regulate out an external flow change, comprising a laser source (11) for transmission of laser radiation (15) to a medium (16) to be measured, a detector (35) for receiving radiation (18) which is emitted, in particular scattered, by the medium (16) when it is irradiated with the laser radiation (15), and an evaluation device (19), which determines at least one speed of the medium (16) on the basis of the radiation received by the detector (35),
wherein the laser source (11) is configured to transmit a multiplicity of laser pulses per measurement (52) of the detector (35), and wherein
the detector (35) is configured to integrate a multiplicity of laser pulses (51, 81a, 81 b, 81 c) per measurement (52), wherein the laser source (11) is configured to transmit the laser pulses at a repetition rate which is one or more orders of magnitude greater than the detection rate, and wherein the laser pulses for each measurement are transmitted at a frequency of greater than or equal to about 1 kHz,
**characterized in that** an intensity control device (22) is provided, by means of which the number of laser pulses (51, 81 a, 81 b, 81 c) to be integrated on the detector (35) per measurement can be controlled wherein the control process is carried out as a function of the intensity of the radiation (18) coming from the medium (16).

11. The direct reception Doppler LIDAR apparatus according to claim 10, **characterized**
a) **in that** the laser source (11) can be controlled by the intensity control device (22) such that it transmits a number of laser pulses which can be selected by means of the intensity control device (22) and/or
b) **in that** the detector (35) can be controlled by the intensity control device (22) such that received laser pulses (51, 81 a, 81 b, 81 c) are masked out or are not integrated and/or
c) **in that** the intensity control device (22) is designed to control a first switching device, which is arranged downstream from the laser source (11), in order to select a number of laser pulses directed at the medium (16) and/or
d) **in that** the intensity control device (22) is designed to control a second switching device (24), which is connected in front of the detector (35), in order to select a number of laser pulses (51, 81a, 81b, 81c) which can be received coming from the medium (16).

12. The direct reception Doppler LIDAR apparatus according to claim 11,
**characterized**
**in that** the laser source (11) has a Q-switch, which can be controlled by the intensity control device (22), for controlling the number of laser pulses to be integrated.

13. The direct reception Doppler LIDAR apparatus according to any of the claims 11 or 12,
**characterized**
**in that** the first and/or the second switching device (24) have/has an electrooptical switch and/or an electromechanical switch and/or a fiber-optic switch (76).

14. The direct reception Doppler LIDAR apparatus according to any of the claims 11 to 13,
**characterized**
**in that** a microchannel plate (34) is provided in front of the detector (35), and can be controlled by means of the intensity control device (22).

15. The direct reception Doppler LIDAR apparatus according to any of the claims 10 to 14,
**characterized**
**in that** a detection device, in particular a counter, is provided for detection of the number of laser pulses emitted and/or received per measurement cycle, and in that the evaluation device (19) is designed to determine the actual signal intensity from the number detected by the detection device and from the signal intensity measured by the detector (35).

## Revendications

1. Procédé de mesure LIDAR-Doppler de vitesses par réception directe destiné à un aéronef pour permettre un couplage direct des signaux de mesure dans la commande de vol de l'aéronef pour effectuer un réglage d'une modification externe de l'écoulement, selon lequel un faisceau laser (15) est dirigé vers le milieu (16) à mesurer, et le rayonnement (18) émis par le milieu (16) est mesuré au moyen d'un détecteur (35), comprenant les étapes consistant à :
a) émettre plusieurs impulsions laser par mesure (52) et
b) intégrer plusieurs impulsions laser (51, 81a, 81b, 81c) reçues avec le détecteur par mesure (52),
les impulsions laser étant émises avec un taux de répétitions qui est supérieur d'un ou de plusieurs ordre(s) de grandeur au taux de détection, et
les impulsions laser étant émises pour chaque mesure à une fréquence qui est supérieure ou égale à environ 1 kHz,
**caractérisé en ce qu'**
il comporte l'étape consistant à :
c) commander le nombre des impulsions laser (51, 81a, 81 b, 81c) intégrées ou devant être intégrées sur le détecteur (35) par mesure,
la commande étant effectuée en fonction de l'intensité du rayonnement (18) provenant du milieu (16).

2. Procédé conforme à la revendication 1,
**caractérisé en ce que**
l'intensité globale du rayonnement reçu est réglée au moyen de la commande du nombre d'impulsions laser (51, 81a, 81b, 81c) intégrées ou à intégrer sur le détecteur (35).

3. Procédé conforme à l'une des revendications 1 et 2,
**caractérisé en ce que**
l'étape c) comprend au moins l'une des étapes partielles suivantes consistant à :
c1) commander une source laser (11) émettant les impulsions laser de sorte qu'un nombre modifiable défini d'impulsions laser soit émis,
c2) commander le nombre des impulsions laser dirigées vers le milieu (16) au moyen d'un premier dispositif de commutation commandable branché en aval de la source laser (11),
c3) commander le détecteur (35) de sorte que des impulsions laser (51, 81a, 81b, 81c) reçues soient supprimées ou non intégrées et/ou
c4) commander le nombre d'impulsions laser (51, 81a, 81 b, 81c) reçues par le détecteur (35) au moyen d'un second dispositif de commutation (24) commandable branché en amont du détecteur (35).

4. Procédé conforme à l'une des revendications 1 à 3,
**caractérisé en ce que**
la commande est effectuée de façon à obtenir une intensité de signal élevée au-dessous d'un seuil de saturation du détecteur (35).

5. Procédé conforme à l'une des revendications 1 à 4,
**caractérisé en ce que**
l'étape c) comprend des étapes consistant à :
ca) comparer la valeur de mesure actuelle avec une valeur de seuil supérieure prédéfinie pour une intensité trop élevée et diminuer le nombre des impulsions laser (51, 81a, 81b, 81c) intégrées pour la mesure suivante si la valeur de mesure actuelle dépasse la valeur de seuil supérieure, et/ou
cb) comparer la valeur de mesure actuelle avec une valeur de seuil inférieure prédéfinie pour une intensité trop faible et augmenter le nombre des impulsions laser (51, 81a, 81b, 81c) intégrées pour la mesure suivante si la valeur de mesure actuelle passe au-dessous de la valeur de seuil inférieure.

6. Procédé conforme à la revendication 5,
**caractérisé en ce que**
les étapes partielles ca) et cb) sont effectuées de façon répétitive dans des mesures directement ou indirectement successives jusqu'à ce que la valeur de mesure actuelle soit située entre la valeur de seuil supérieure et la valeur de seuil inférieure.

7. Procédé conforme à l'une des revendications 5 et 6,
**caractérisé en ce que**
la modification du nombre d'impulsions laser (51, 81a, 81b, 81c) intégré ou à intégrer sur le détecteur est effectuée sur le fondement d'un facteur constant, ou d'une valeur additive / soustractive constante ou proportionnellement à l'écart avec une valeur idéale prédéfinie.

8. Procédé conforme à l'une des revendications 1 à 7,
**caractérisé en ce que**
l'étape c) comprend les étapes consistant à :
cd) prévoir une intensité à attendre du signal de mesure à partir des variations antérieures de l'intensité du signal de mesure, et
ce) régler le nombre des impulsions laser (51, 81a, 81b, 81c) devant être intégrées sur le détecteur sur le fondement de cette prévision.

9. Procédé conforme à l'une des revendications précédentes,
**caractérisé en ce qu'**
il comprend des étapes consistant à :
d1) effectuer l'extraction du détecteur (35) avec un taux de détection constant indépendant du nombre d'impulsions laser (51, 81a, 81b, 81c) intégrées ou
d2) effectuer l'extraction du détecteur (35) après avoir atteint une intensité prédéfinie.

10. Dispositif LIDAR Doppler à réception directe (10) destiné à un aéronef pour permettre de mesurer des vitesses par mesure LIDAR Doppler à réception directe et d'effectuer un couplage direct des signaux de mesure dans la commande de vol de l'aéronef pour effectuer un réglage d'une modification de l'écoulement externe, comprenant une source laser (11) pour émettre un rayonnement laser (15) sur un milieu (16) à mesurer, un détecteur (35) pour recevoir le rayonnement (18) qui est émis et en particulier diffusé par le milieu (16) lors de l'irradiation avec le rayonnement laser (15) et un dispositif d'exploitation (19) qui détermine sur le fondement du rayonnement reçu par le détecteur (35) au moins une vitesse du milieu (16), dans lequel
la source laser (11) est réalisée pour émettre plusieurs impulsions laser par mesure (52) du détecteur (35),
le détecteur (35) est réalisé pour intégrer plusieurs impulsions laser (51, 81a, 81b, 81c) par mesure (52),
la source laser (11) est réalisée pour émettre les impulsions laser avec un taux de répétition qui est supérieur d'un ou de plusieurs ordre(s) de grandeur au taux de détection du détecteur (35), et
les impulsions laser sont émises, par mesure, à une fréquence qui est supérieure ou égale à environ 1 kHz,
**caractérisé en ce qu'**
il est prévu un dispositif de commande d'intensité (22) au moyen duquel le nombre des impulsions laser (51, 81a, 81b, 81c) à intégrer, par mesure, sur le détecteur peut être commandé,
la commande étant effectuée en fonction de l'intensité du rayonnement (18) provenant du milieu (16).

11. Dispositif LIDAR Doppler à réception directe conforme à la revendication 10,
**caractérisé en ce que**
a) la source laser (11) peut être commandée par le dispositif de commande de l'intensité (22) de sorte qu'elle émette un nombre d'impulsions laser pouvant être réglé au moyen du dispositif de commande de l'intensité (22), et/ou
b) le détecteur (35) peut être commandé par le dispositif de commande de l'intensité (22) de sorte que des impulsions laser (51, 81a, 81b, 81c) reçues soient supprimées ou ne soient pas intégrées, et/ou
c) le dispositif de commande de l'intensité (22) est réalisé pour commander un premier dispositif de commutation qui est branché en aval de la source laser (11) pour régler le nombre d'impulsions laser dirigées sur le milieu (16), et/ou
d) le dispositif de commande de l'intensité (22) est réalisé pour commander un second dispositif de commutation (24) qui est branché en amont du détecteur (35) pour régler le nombre d'impulsions laser (51, 81a, 81b, 81c) provenant du milieu (16) pouvant être reçues.

12. Dispositif LIDAR Doppler à réception directe conforme à la revendication 11,
**caractérisé en ce que**
la source laser (11) comprend un déclencheur pouvant être commandé par le dispositif de commande de l'intensité (22) pour permettre de commander le nombre d'impulsions laser à intégrer.

13. Dispositif LIDAR Doppler à réception directe conforme à l'une des revendications 11 et 12,
**caractérisé en ce que**
le premier et/ou le second dispositif(s) de commutation (24) comprend (comprennent) un commutateur électro-optique et/ou un commutateur électromécanique et/ou un commutateur à fibres optiques (76).

14. Dispositif LIDAR Doppler à réception directe conforme à l'une des revendications 11 à 13,
**caractérisé en ce qu'**
il est prévu en amont du détecteur (35) une plaque à micro-canaux (34) qui peut être commandée au moyen du dispositif de commande de l'intensité (22).

15. Dispositif LIDAR Doppler à réception directe conforme à l'une des revendications 10 à 14,
**caractérisé en ce qu'**
il est prévu un dispositif de détection en particulier un compteur pour permettre de détecter le nombre d'impulsions laser émises et/ou reçues par cycle de mesure, et le dispositif d'exploitation (19) est réalisé pour déterminer l'intensité de signal effective à partir du nombre détecté par le dispositif de détection et de l'intensité de signal mesuré par le détecteur (35).
